# EUROPÄISCHE PATENTSCHRIFT

(11) **EP 0 752 209 B1**
(45) Veröffentlichungstag und Bekanntmachung des Hinweises auf die Patenterteilung: **12.09.2001**
(21) Anmeldenummer: 96890099.3
(22) Anmeldetag: 10.06.1996
(51) Int. Cl.: A21B 5/02, A21C 15/02

(54) **Verfahren zur Herstellung von Behältern, Bechern, Tabletts, Tassen od. dgl. aus essbarem, gegebenenfalls als Futtermittel verwendbarem und biologisch leicht abbaubarem Material**
Method for manufacturing containers, beakers, trays, cups, or the like made of edible or easily fermentable materials
Procédé pour la fabrication de conteneurs, gobelets, tableaux, tasses et simulaires réalisés en des matériaux comestible ou facilement fermentables

(30) Priorität: 07.07.1995 AT 116095
(43) Veröffentlichungstag der Anmeldung: 08.01.1997
(73) Patentinhaber: MKE Metall- und Kunststoffwaren Erzeugungsgesellschaft m.b.H., 3860 Heidenreichstein (AT)
(72) Erfinder: Haas, Franz, Ing., 1010 Wien (AT)
(74) Vertreter: Berger, Erhard, Dr.

(56) Entgegenhaltungen:
- WO-A-88/00797
- WO-A-92/10938
- WO-A-95/00023

## Beschreibung

Die Erfindung betrifft ein Verfahren zur Herstellung von Behältern, Bechern, Tabletts, Tassen od. dgl. aus eßbarem, gegebenenfalls als Futtermittel verwendbarem und biologisch leicht abbaubarem Material, insbesondere aus einer Teig- bzw. Backmasse auf Stärkebasis oder aus Waffelteig, mit einer beheizbaren Backform, wobei bei geschlossenen Formteilen der Backform sind bei gegenüber der endgültigen Wandstärke vergrößerter Wandstärke vorgebacken und bei der endgültigen Wandstärke ausgebacken wird.

Gegenstände der genannten Art werden vielfach zu Verpakkungs- und Transportzwecken von Speisen, insbesondere auch als Einweggeschirr z.B. als Sandwichteller, Partyteller oder im Fast-Foodbereich eingesetzt. Hat man dieses Produkt früher aus Kunststoffen hergestellt, so ist man heute soweit, daß einer umweltbewußten Lösung der Vorzug gegeben wird. Es gibt alle die genannten Behältnisse bereits aus eßbarem Material, das in der Art von Eistüten oder Bechern aus Waffelteig oder bei Tellern sowie verschließbaren Transportboxen für Speisen aus einer Teig- oder Backmasse auf Stärkebasis mit Zuschlagstoffen bestehen kann. Während aus Waffelteig gefertigte Behältnisse gerne gegessen werden, sind die Stärkeprodukte eher dem Tierfutter oder den Futterzuschlagstoffen zuzuordnen. Auch im Falle einer Deponieentsorgung oder Kompostierung wird der gewünschte Zweck, nämlich eine umweltfreundliche rasche Verrottung, erreicht.

Die Herstellung der Behältnisse erfolgt mit Hilfe von mehrteiligen Backformen mit Formkernen auf Waffelmaschinen. Gemäß der WO 95/00023 ist es zweckmäßig, zur Erzielung eines kompakten Backergebnisses bei gegenüber der endgültigen Wandstärke vergrößerter Wandstärke vorzubacken und dann beim Fertigbacken auf die endgültige Wandstärke zu komprimieren. Die vergrößerte Wandstärke wird bei geschlossener Form durch unvollständiges Einschieben des Formkernes in den Formunterteil erreicht. Das Backergebnis ist befriedigend, wenngleich die Bemessung der Wandstärkenvergrößerung in der wichtigen Vorbackphase zu Schwierigkeiten führt. Bei zu großer vorläufiger Wandstärke füllt der Teig die Form nicht aus; bei zu geringer vorläufiger Wandstärke, aber auch bei einer Wandstärke, die eine vollständige Verteilung der Teigmasse in der Form ermöglicht, tritt Teigmasse nach kurzer Zeit aus den Dampfschlitzen der geschlossenen Form aus. Die vorgenannten Parameter führen zu einer Verschlechterung des Endergebnisses gegenüber dem gewünschten Idealzustand des Backerzeugnisses.

Die Erfindung zielt darauf ab, ein Verfahren anzugeben, das individuell auf die Eigenschaften des Teiges, sei es Waffelteig oder eine Stärkemischung, abstimmbar ist und das zu besonders gut einstellbaren Eigenschaften des Endproduktes führt. Dies wird dadurch erreicht, daß nach einem ersten Vorbacken bei geschlossenen Formteilen der Backform bei vergrößerter Wandstärke, die beispielsweise der doppelten endgültigen Wandstärke entspricht und die beispielsweise während eines Zeitraumes von 20 Sekunden durchgeführt wird, mindestens eine zweite Vorbackphase bei weiterhin geschlossenen Formteilen und bei noch weiter vergrößerter Wandstärke, beispielsweise bei dreifacher endgültiger Wandstärke für etwa 30 Sekunden erfolgt und daß daran das Fertigbacken bei der endgültigen Wandstärke z.B. für 40 Sekunden anschließt. Nach der zweiten Vorbackphase bzw. der Vorbackphase mit der größten Wandstärke kann die Wandstärke stufenweise auf die endgültige Wandstärke des Fertigbackens reduziert werden. Das Vorbacken wird somit bei geschlossener Form in mindestens zwei Phasen geteilt, wobei die zweite Phase bei noch mehr vergrößerter Wandstärke erfolgt, als die erste Phase. In der ersten Phase, die sofort nach dem Befüllen der Backform eintritt, wird der Teig infolge der schlagartig einsetzenden Dampfentwicklung nach dem Eingießen der flüssigen Teigphase in die heiße Backform von der zu den Dampfschlitzen gerichteten Dampfströmung mitgerissen und im Inneren der Backform gleichmäßig verteilt. Die durch die gegenseitige Lage der Backformteile bestimmte Wandstärke ist in der ersten Vorbackphase noch nicht auf das später vorgesehene Maximum vergrößert, da bei sehr großem Innenvolumen des Backraumes die Dampfbildung und die Dampfströmung nicht in dem für die Verteilung des Teiges notwendigem Maße einsetzt. Sobald der Teig durch fortgesetzte Hitzeeinwirkung aufgetrieben wird, beginnt die zweite Vorbackphase bei weiter vergrößerter Wandstärke (Zwischenraum zwischen Formkern und Formunterteil). Jetzt quillt der Teig unter Dampfentwicklung auf und füllt den zusätzlich freigegebenen Wandstärkeraum aus. Durch den in der zweiten Vorbackphase vergrößerten Innenraum der Backform wird verhindert, daß der Teig übermäßig durch die Dampfschlitze austritt und verloren geht. Bei entsprechender Strukturfestigkeit setzt schließlich das Fertigbacken ein. Der Formkern wird bis zur Endwandstärke eingeschoben. Das Backerzeugnis wird während des Fertigbakkens schlagartig, stufenweise oder kontinuierlich komprimiert. Insbesondere ist es zweckmäßig, wenn nach der zweiten Vorbackphase die Reduzierung der Wandstärke auf die endgültige Wandstärke beim Fertigbacken in mehreren Hüben erfolgt, wobei die Formteile, nämlich ein Formkern in einen Formunterteil, stufenweise immer tiefer ineinander eintauchen. Dadurch lassen sich unterschiedliche Verdichtungsgrade im Oberflächenbereich einer Wand und im Inneren der Wand des Backerzeugnisses erreichen. Eine hoch verdichtete Oberfläche führt zu einem flüssigkeitsresistenten Erzeugnis.

Durch Einstellen der Wandstärken und der Vorbackzeiten in den beiden Phasen läßt sich ferner einerseits ein fast porenfreies gegen Feuchtigkeit wenig empfindliches Endprodukt herstellen, das z.B. als Trinkbecher geeignet ist. Es können somit beispielsweise Speisenbehälter mit Deckel für heiße Gerichte, deren Dampf sich als Feuchtigkeit auf allen Behälterwänden niederschlägt, nach dem erfindungsgemäßen Verfahren mit der nötigen Resistenz hergestellt werden.

Je nach Abstimmung der Vorbackzeiten und der Wandstärken in den zwei Vorbackphasen und der Art der Verdichtung können auch Behältnisse mit lockerer Innenstruktur und dichter Oberfläche der Wandungen hergestellt werden. Dieser Strukturaufbau ist dann zweckmäßig, wenn Behältnisse wärmespeichernde oder wärmeisolierende Aufgaben haben. In diesem Fall könnte die erste Vorbackphase bei z.B. 1,5-facher Wandstärke für etwa 15 Sekunden die zweite Vorbackphase bei z.B. 2-fache Wandstärke für etwa 25 Sekunden und sodann das Fertigbacken bei einfacher Wandstärke erfolgen.

In den Zeichnungen sind die Verfahrensschritte beispielshaft dargestellt. Fig. 1 zeigt eine Backform für einen Teller im Querschnitt in einer Schließstellung gemäß einer ersten Vorbackphase, Fig. 2 die Backform in einer zweiten Vorbackphase und Fig. 3 die Backform in der Schließstellung für ein Fertigbacken.

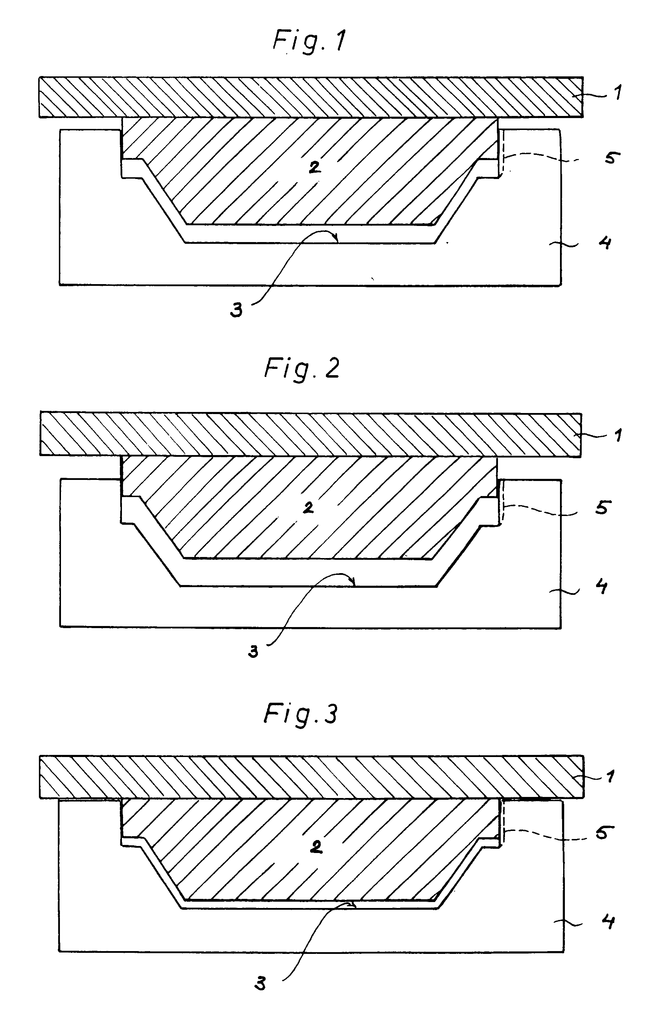

Auf einer Formplatte 1 ist ein Formkern 2 angeordnet, der in eine Ausnehmung 3 eines beheizbaren Form-Unterteiles 4 gemäß Fig. 1, 2 und 3 verschieden tief eintaucht. Dadurch ergeben sich unterschiedliche Wandstärken. Zum Befüllen sowie zur Entnahme kann die Formplatte 1 mit dem Formkern 2 hochgefahren werden. Der Form-Unterteil 4 ist in der Zeichenebene zweigeteilt, sodaß der Teller leicht entnommen werden kann.

Die Form ist in Fig. 1, 2 und 3 jeweils geschlossen. Ein Dampfschlitz 5 ist als Beispiel strichliert angedeutet. Am Umfang können mehrere Dampfschlitze vorgesehen sein. Ihre Anordnung in der vertikalen Teilungsebene (Zeichenebene) ist aus Gründen leichterer Reinigung besonders zweckmäßig. Der Teller nach Fig. 1 bis 3 ist quadratisch oder rechteckig. Bei Ergänzung einer Symmetrieachse könnte der Teller natürlich auch im Grundriß kreisrund sein.

Bei vollständig geöffneter Form wird flüssiger oder pastöser Teig in die Ausnehmung 3 eingebracht und die Formplatte 1 mit dem Kern 2 in die Position nach Fig. 1 abgesenkt. Gegenüber der Endlage nach Fig. 3 beträgt die Wandstärke, also der Abstand zwischen der Kernmantelfläche und der Oberfläche der Ausnehmung etwa das Doppelte der Endlage nach Fig. 3. Der Teig verteilt sich beim Schließen der heißen Form im Formspalt zwischen Kern 2 und Form-Unterteil 4 bis zum oberen Rand des Tellers. Bei nunmehr geschlossener Form erfolgt die erste Vorbackphase. Wenn eine Backmasse auf Stärkebasis verwendet wird, dann erfolgt das erste Vorbacken bei etwa der doppelten Wandstärke für 20 Sekunden. Dampf entweicht durch den Dampfschlitz 5. Es quillt der Teig auf.

Die zweite Vorbackphase schließt bei auf die dreifache Wandstärke zurückgezogenem Kern 2 an. Der gewonnene Freiraum gegenüber Fig. 1 dient der Entfaltung des Teiges unter Dampfentwicklung während eines Zeitraumes von etwa 30 Sekunden. Der Teig bleibt im Kontakt mit der Form, hebt also vom Kern 2 nicht ab und weicht auch vom Tellerrand (Fig. 2) nicht zurück. Dazu ist die Strukturfestigkeit nach der ersten Vorbackphase bereits zu groß. Weiterhin entweicht Dampf aus dem Dampfschlitz 5 (bzw. den Dampfschlitzen). Die eingestellte Wandstärke ist so bemessen, daß nur sehr geringe Teigmengen aus den Dampfschlitz 5 austreten.

Nach der ersten und zweiten Vorbackphase schließt das Fertigbacken bei endgültiger Wandstärke an. Dazu wird der Formkern 2 bzw. die Formplatte 1 aus der Position nach Fig. 2 in die Position nach Fig. 3 eingeschoben. Dieses Einschieben kann schlagartig erfolgen, sodaß die lockere vorgebackene Wandung gemäß Fig. 2 plötzlich verdichtet wird, es kann aber auch in mehreren Hüben erfolgen, die jeweils ein tieferes Eintauchen des Kernes 2 in den Form-Unterteil 4 bewirken. Das Fertigbacken auf die Endwandstärke nimmt beispielsweise 40 Sekunden in Anspruch. Dabei kann Restdampf durch die Dampfschlitze 5 entweichen.

Die Backzeiten, die Wandstärken in den Phasen die Temperaturen und die Backmischungen für den Teig sind einige der Parameter, mit deren Hilfe die Beschaffenheit des Endproduktes beeinflußt werden können. Die Unterteilung der Vorbackphase und die beispielsweise doppelte und dann etwa dreifache Wandstärke vor dem Fertigbacken bei Endwandstärke sind wesentliche Verfahrensmerkmale. Es ist klar, daß die hier angegebenen Zeit und Verhältniswerte für andere Formkörper als der hier dargestellten Teller unterschiedlich sein können. Wesentlich ist jedenfalls die weitere Vergrößerung der Wandstärke im Zuge der Vorbackphase mit anschließender Endverdichtung und dem Fertigbacken.

## Patentansprüche

1. Verfahren zur Herstellung von Behältern, Bechern, Tabletts, Tassen od. dgl. aus eßbarem, gegebenenfalls als Futtermittel verwendbarem und biologisch leicht abbaubarem Material, insbesondere aus einer Teig- bzw. Backmasse auf Stärkebasis oder aus Waffelteig, mit einer beheizbaren Backform, wobei bei geschlossenen Formteilen der Backform und bei gegenüber der endgültigen Wandstärke vergrößerter Wandstärke vorgebacken und bei der endgültigen Wandstärke ausgebacken wird, **dadurch gekennzeichnet, daß** nach einem ersten Vorbacken bei geschlossenen Formteilen der Backform bei vergrößerter Wandstärke, die beispielsweise der doppelten endgültigen Wandstärke entspricht und die beispielsweise während eines Zeitraumes von 20 Sekunden durchgeführt wird, mindestens eine zweite Vorbackphase bei weiterhin geschlossenen Formteilen und bei noch weiter vergrößerter Wandstärke, beispielsweise bei dreifacher endgültiger Wandstärke für etwa 30 Sekunden erfolgt und daß daran das Fertigbacken bei der endgültigen Wandstärke z.B. für 40 Sekunden anschließt.

2. Verfahren nach Anspruch 1, **dadurch gekennzeichnet, daß** nach der zweiten Vorbackphase die Reduzierung der Wandstärke auf die endgültige Wandstärke beim Fertigbacken in mehreren Hüben erfolgt, wobei die Formteile, nämlich ein Formkern in einen Formunterteil, stufenweise immer tiefer ineinander eintauchen.

## Claims

1. Method for manufacturing containers, beakers, trays, cups or the like from an edible and easily biodegradable material which can possibly also be used as animal feed, in particular from a starch-based dough or baking mixture or from waffle dough, with a heatable baking mould, in which method preliminary baking takes place with closed parts of the baking mould and with increased wall thickness in comparison with the final wall thickness and final baking takes place with the final wall thickness, **characterized in that**, after a first preliminary baking with closed parts of the mould and increased wall thickness, which corresponds for example to twice the final wall thickness, and which is carried out for example during a time period of 20 seconds, at least a second preliminary baking phase takes place with the mould parts still closed and with still further increased wall thickness, for example three times the final wall thickness, for approximately 30 seconds, and in that the final baking with the final wall thickness follows thereafter, for example for 40 seconds.

2. Method according to Claim 1, **characterized in that**, after the second preliminary baking phase, the reduction in wall thickness to the final wall thickness takes place during the final baking in a number of displacements, the mould parts, to be specific a mould core in a lower mould part, moving increasingly one inside the other in stages.

## Revendications

1. Procédé pour la fabrication de récipients, de gobelets, de plateaux, de tasses ou analogues, à partir d'une matière comestible, utilisable le cas échéant en tant que nourriture pour les animaux, et facilement biodégradable, notamment à partir d'une masse pâteuse ou bien d'une masse à cuire à base d'amidon ou à partir d'une pâte à gaufres, ce procédé utilisant un moule de cuisson propre à être chauffé et dans lequel, lorsque les parties de moule du moule de cuisson sont fermées, une précuisson est effectuée avec des épaisseurs de paroi augmentées par rapport à l'épaisseur de paroi finale, tandis que la cuisson finale s'effectue à l'épaisseur définitive de la paroi, **caractérisé en ce qu'**après une première précuisson, par exemple pendant une durée de 20 secondes, les parties de moule de cuisson étant fermées et l'épaisseur de paroi étant augmentée, pour correspondre par exemple à deux fois l'épaisseur de paroi finale, est effectuée au moins une deuxième phase de précuisson pendant environ 30 secondes, les parties de moule restant fermées et l'épaisseur de paroi étant encore augmentée, par exemple jusqu'à représenter trois fois l'épaisseur de paroi finale et en ce que cette phase est suivie de la cuisson définitive, à l'épaisseur de paroi finale, par exemple pendant 40 secondes.

2. Procédé selon la revendication 1, **caractérisé en ce qu'**après la deuxième phase de précuisson, la réduction de l'épaisseur de paroi jusqu'à l'épaisseur de paroi finale, lors de la cuisson finale, s'effectue en plusieurs étapes, lors desquelles les parties de moule, à savoir un noyau dans une partie inférieure de moule, s'engagent graduellement de plus en plus profondément l'une dans l'autre.
